(19) Europäisches Patentamt
European Patent Office
Office européen des brevets

(11) Numéro de publication: **0 039 256**
**B1**

(12) **FASCICULE DE BREVET EUROPEEN**

(45) Date de publication du fascicule du brevet: **12.09.84**

(51) Int. Cl.$^3$: **C 03 C 17/23**

(21) Numéro de dépôt: **81400348.9**

(22) Date de dépôt: **06.03.81**

(54) **Procédé d'application par pyrolyse, sur des surfaces de verre, de couches d'oxyde d'étain dopées par un halogène, de préférence par le fluor.**

(30) Priorité: **15.03.80 DE 3010077**

(43) Date de publication de la demande:
**04.11.81 Bulletin 81/44**

(45) Mention de la délivrance du brevet:
**12.09.84 Bulletin 84/37**

(84) Etats contractants désignés:
**BE DE FR GB IT LU NL SE**

(56) Documents cités:
**BE-A- 813 239**
**FR-A-2 314 902**
**FR-A-2 323 649**
**FR-A-2 352 758**
**FR-A-2 380 997**

(73) Titulaire: **SAINT-GOBAIN VITRAGE**
**Les Miroirs 18, avenue d'Alsace**
**F-92400 Courbevoie (FR)**
(84) **BE FR GB IT LU NL SE**

(73) Titulaire: **VEGLA Vereinigte Glaswerke GmbH**
**Viktoria Allee 3-5**
**D-5100 Aachen (DE)**
(84) **DE**

(72) Inventeur: **Mattes, Günther**
**Am Schönauer Acker 2**
**D-5100 Aachen (DE)**
Inventeur: **Ortmanns, Günter**
**Höfchensweg 121**
**D-5100 Aachen (DE)**

(74) Mandataire: **Eudes, Marcel et al**
**Saint-Gobain Recherche 39 Quai Lucien Lefranc**
**F-93304 Aubervilliers Cedex (FR)**

**EP 0 039 256 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention concerne un procédé d'application par pyrolyse, sur une surface de verre, d'une couche réfléchissant les rayons infrarouges, formée d'oxyde d'étain dopé par un halogène, de préférence le fluor, dans lequel on applique, sur une surface de verre qui est à une température de 400 à 650°C, un composé organique d'étain sous forme de poudre d'une grosseur de particules inférieure à 20 $\mu$m, en suspension dans un courant gazeux porteur, en présence d'un composé fluoré.

Il est connu déposer des films d'oxydes métalliques sur des surfaces de verre, par pyrolyse de composés organométalliques sous forme de poudre qui sont mis en suspension dans un courant gazeux (FR—A—2 277 049).

Il est connu en outre qu'en dopant des couches d'oxydes d'étain par un halogène, en particulier par le fluor, on peut réaliser des couches d'oxyde d'étain ayant des propriétés particulièrement avantageuses, en particulier une conductivité électrique accrue et un pouvoir accru de réflexion des rayons infrarouges. Dans le procédé défini plus haut, connu par le FR—A 2 380 997, on effectue l'addition du composé fluoré en mélangeant ce composé fluoré gazeux au courant de gaz porteur contenant le composé d'étain.

Pour obtenir des couches très uniformes, ce qui est particulièrement important pour les vitres transparentes devant servir à la construction de fenêtres, il faut qu'un rapport constant soit garanti entre le composé halogéné et le composé d'étain et il faut que les deux constituants soient bien mélangés avant l'application sur la surface de verre. Lorsque'on applique des composés fluorés gazeux, il est apparu que le dosage constant du composé fluoré et la distribution uniforme du composé fluoré dans le courant porteur nécessitent des dispositifs de réglage coûteux, si l'on exige une grande uniformité de la couche.

L'invention a pour but de perfectionner le procédé défini plus haut de façon qu'avec un appareillage peu important et par des mesures peu coûteuses, on obtienne une grande uniformité du rapport fluor/étain pendant la pyrolyse, afin que la couche d'oxyde d'étain que se forme lors de la pyrolyse soit aussi homogène que possible et présente ainsi des propriétés très uniformes.

Selon l'invention, ce problème est résolu essentiellement grâce au fait que, comme composé halogéné, on utilise un composé sous forme pulvérulente qui est en suspension dans le courant gazeux porteur utilisé pour le composé d'étain.

Dans un premier mode d'éxecution du nouveau procédé, on mélange dans la proportion désirée au composé d'étain sous forme de poudre un composé halogéné sous forme de poudre et on applique ce mélange sur la surface de verre à l'aide du courant de gaz porteur. Etant donné qu'en mélangeant intimement les deux constituants pulvérulents on peut obtenir une grande uniformité de distribution des constituants au sein du mélange, un rapport constant entre les constituants est assuré lorsque la matière atteint la surface de verre.

Selon un autre mode d'exécution du nouveau procédé, il est particulièrement avantageux d'utiliser des composés organiques étainfluor pulvérulents, c'est à dire des composés dont les molécules contiennent à la fois des atomes de fluor en un rapport déterminé. Si le rapport entre l'étainet le fluor dans le composé correspond au rapport que l'on veut obtenir pour former la couche, il suffit simplement de mettre ce composé en suspension dans le courant de gaz porteur. Si l'on désire un autre rapport étain/fluor, on peut utiliser un ature composé correspondant au rapport désiré ou bien ou peut mélanger au composé étain/fluor un deuxième constituant pulvérulent qui modifie le rapport étain/fluor dans le sens désiré.

Comme composé organostanniques autodopants, on peut utiliser en particulier des composés répondant à la formule structurale:

$$[R_xX_bSn]_c\ O_d$$

dans laquelle:

R est un radical alkyle, aryle, alkylaryle ou aralkyle,
X un halogène, de préférence le fluor,
*c* vaut 1 ou 2,
*d* peut valoir 0 ou 1, et
si c=1 et d=0, on a a+b=4 (*a* et *b* étant des nombres entiers de 0 à 4)
si c=1 et d=1, on a a+b=2 (*a* et *b* étant des nombres entiers de 0 à 2) et
si c=2 et d=1, on a: a+b=3 (*a* et *b* étant des nombres entiers de 0 à 3)

Dans les exemples suivants, on décrit en détail différentes possibilités de mise en oeuvre de l'invention.

Exemple 1

On mélange intimement 20 à 65% en poids d'oxyde de dibutylétain $(n\text{-}C_4H_9)_2SnO$ ayant une grosseur de grains inférieure à 20 $\mu$m et 80 à 35% en poids de difluorure de dibutylétain $(n\text{-}C_4H_9)_2SnF_2$. Dans ce mélange, on obtient un rapport de poids étain/fluor compris entre 100: 10,3 et 100: 25,2.

On introduit le mélange pulvérulent dans un réservoir. De ce réservoir, à l'aide d'un système doseur réglé électroniquement, on amène le mélange pulvérulent à un système porteur sec et on introduit le courant gazeux contenant la poudre dans une buse à fente placée horizontalement en position fixe au-dessus d'une bande de verre flotté. La poudre en suspension dans le courant de gaz porteur, distribuée de façon homogène sur la longueur de la buse à fente, sort de la fente et se pyrolyse sur la surface chaude de la bande de verre en mouvement continu. L'excès de poudre qui n'arrive pas sur la surface du verre et les produits de réaction formés lors de la pyrolyse sont aspirés hors de la chambre de réaction, fermée de tous côtés, par un système d'aspiration réglable.

Avec une consommation de poudre de 2 $g/m^2$, on obtient une couche d'oxyde d'étain de 80 nm d'épaisseur et, avec une consommation de poudre de 10 $g/m^2$, une couche d'oxyde d'étain de 700 nm d'épaisseur. Quand l'épaisseur de la couche d'oxyde d'étain est de 80 nm, la proportion de rayonnement réfléchie dans la gamme de 2 à 50 μm est de 40% et, quand l'épaisseur de la couche de 700 nm, cette proportion est de 75%.

Exemple 2

On utilise un composé chimique de composition $(n{-}C_4H_9)_2SnF_2$. Ce composé (difluorure de dibutylétain) est sous forme solide et on utilise une fraction ayant une grosseur de grain inférieure à 20 μm. Dans ce composé, le rapport de poids étain/fluor est de 100: 32, de sortie que dans la couche finie, il faut s'attendre, sur la surface du verre, à un rapport étain/fluor d'un ordre de grandeur similaire. On disperse également la poudre dans un courant de gaz sec et on la projette sur la surface d'une bande de verre flotté immédiatement à la suite de sa fabrication.

Exemple 3

On utilise un complexe ammonium-tétrafluorure de dibutylétain de formule:

$$(NH_4)_2[(n\text{-}C_4H_9)_2SnF_4]$$

Dans ce complexe, le rapport de poids étain/fluor est de 100: 64, de sorte que la couche finale est aussi plus fortement dopée en conséquence.

L'application de la poudre s'effectue de la façon décrite à l'exemple 1.

Exemple 4

Comme support pulvérulent de l'étain et du fluor, on utilise le trifluoracétate de dibutylétain

$$(n\text{-}C_4H_9)_2Sn(CF_3COO)_2.$$

Dans ce composé le rapport de poids étain/fluor est de 100: 96. On utilise une fraction de la poudre ayant une grosseur de grain inférieure à 20 μm et, de la façon décrite à l'exemple 1, on la met en suspension dans un courant de gaz sec et on la projette sur la surface chaude d'une bande de verre flotté.

**Revendications**

1. Procédé d'application par pyrolyse, sur une surface de verre, d'une couche réfléchissant les rayons infrarouges, formée d'oxyde d'étain dopé par un halogène, de préférence le fluor, dans lequel on applique, sur une surface de verre qui est à une température de 400 à 650°C un composé organique d'étain sous forme de poudre d'une grosseur de particules inférieure à 20 μm, en suspension dans un courant gazeux porteur, en présence d'un composé halogéné, procédé caractérisé par le fait que comme composé halogéné, on utilise un composé pulvérulent qui est en suspension dans le courant gazeux porteur utilisé pour le composé d'étain.

2. Procédé selon la revendication 1, caractérisé par le fait que l'on utilise le composé halogéné pulvérulent en mélange avec le composé d'étain pulvérulent.

3. Procédé selon la revendication 1, caractérisé par le fait que l'on utilise un composé organique étain-halogène pulvérulent, en particulier un composé organique étain-fluor pulvérulent.

4. Procédé selon la revendication 3, caractérisé par le fait que l'on utilise un composé organique étain-halogène répondant à la formule structurale générale:

$$[R_a\ X_b\ Sn]_c\ O_d$$

dans laquelle:

R est un radical alkyle, aryle, alkylaryle ou aralkyle,

X est un halogène, de préférence le fluor,

*c* vaut 1 ou 2,

*d* peut valoir 0 ou 1, et

si c=1 et d=0, on a: a+b=4 (*a* et *b* étant nombres entiers de 0 à 4)

si c=1 et d=1, on a: a+b=2 (*a* et *b* étant des nombres entiers de 0 à 2)

si c=2 et d=1, on a: a+b=3 (*a* et *b* étant des nombres entiers de 0 à 3)

5. Procédé selon la revendication 4, caractérisé par le fait que, comme composé organique étain-fluor, on utilise le difluorure de dibutylétain

$$(n\text{-}C_4H_9)_2SnF_2.$$

6. Procédé selon la revendication 3, caractérisé par le fait que comme composé organique étain-fluor, on utilise le complexe ammonium-tétrafluorure de dibutylétain

$$(NH_4)_2[(n\text{-}C_4H_9)_2SnF_4]$$

7. Procédé selon la revendication 3, caractérisé par le fait que, comme composé organique étain-fluor, on utilise de trifluoracétate de dibutylétain

$$(n\text{-}C_4H_9)_2Sn(CF_3COO)_2.$$

**Patentansprüche**

1. Verfahren zum Aufbringen einer Infrarotstrahlung reflektierenden Schicht aus mit einem Halogen, vorzugsweise mit Fluor, dotiertem

Zinnoxid durch Pyrolyse auf eine Glasoberfläche, bei dem auf die eine Temperatur von 400 bis 650°C aufweisende Glasoberfläche eine organische Zinnverbindung in Pulverform mit einer Teilchengröße von weniger als 20 $\mu$m als Suspension in einem gasförmigen Trägerstrom in Gegenwart einer Halogenverbindung aufgebracht wird, dadurch gekennzeichnet, daß als Halogenverbindung eine pulverförmige Verbindung verwendet wird, die in dem gasförmigen Trägerstrom für die Zinnverbindung suspendiert ist.

2. Verfahren nach Anspruch 1, dadurch gekennzeichnet, daß die pulverförmige Halogenverbindung in Mischung mit der pulverförmigen Zinnverbindung verwendet wird.

3. Verfahren nach Anspruch 1, dadurch gekennzeichnet, daß eine pulverförmige organische Zinn-Halogen-Verbindung, insbesondere eine pulverförmige organische Zinn-Fluor-Verbindung, verwendet wird.

4. Verfahren nach Anspruch 3, dadurch gekennzeichnet, daß eine organische Zinn-Halogen-Verbindung folgender allgemeiner Strukturformel verwendet wird:

$$[R_aX_bSn]_cO_d$$

wobei

R ein Alkyl-, Aryl-, Alkylaryl- oder ein Aralkylrest, und

X ein Halogen, vorzugsweise Fluor ist, und

c einen Wert von 1 oder 2, und

d einen Wert von 0 oder 1 annehmen kann, wobei

bei c=1 und d=0 a+b=4 ist (a, b ganzzahlig von 0 bis 4),

bis c=1 und d=1 a+b=2 ist (a, b ganzzahlig von 0 bis 2) und

bei c=2 und d=1 a+b=3 ist (a, b ganzzahlig von 0 bis 3).

5. Verfahren nach Anspruch 4, dadurch gekennzeichnet, daß als organische Zinn-Fluor-Verbindung Dibutylzinndifluorid

$$-(n\text{-}C_4H_9)_2SnF_2-$$

verwendet wird.

6. Verfahren nach Anspruch 3, dadurch gekennzeichnet, daß als organische Zinn-Fluor-Verbindung Ammonium-Dibutylzinntetrafluorid (Komplex)

$$-(NH_4)_2[(n\text{-}C_4H_9)_2SnF_4]-$$

verwendet wird.

7. Verfahren nach Anspruch 3, dadurch gekennzeichnet, daß als organische Zinn-Fluor-Verbindung Dibutylzinntrifluoracetat

$$-(n\text{-}C_4H_9)_2Sn(CF_3COO)_2-$$

verwendet wird.

**Claims**

1. Method of applying to a glass surface, by pyrolysis, a layer for reflecting infra-red radiation formed of tin oxide doped with a halogen, preferably fluorine, in which there is applied to a surface of the glass which is at a temperature from 400 to 650°C an organic tin compound in the form of a powder having a particle size less than 20 $\mu$m, in suspension in a stream of a carrier gas, in the presence of a halogen compound, the method being characterised in that there is used as the halogen compound a pulverulent compound in suspension in the carrier gas stream used for the tin compound.

2. Method according to claim 1, characterised in that the pulverulent halogen compound is used in admixture with the pulverulent tin compound.

3. Method according to claim 1, characterised in that a pulverulent organic tin-halogen compound, such as a pulverulent tin-fluorine organic compound is used.

4. Method according to claim 3, charactersed in that there is used an organic tin-halogen compound having the general structural formula:

$$[R_a\ X_b\ Sn]_c\ O_d$$

wherein:

R is an alkyl, aryl, alkylaryl or aralkyl radical,

X is a halogen, preferably fluorine,

*c* is 1 or 2,

*d* may be 0 or 1, and

if c=1 and d=0, a+b=4 (*a* and *b* being whole numbers from 0 to 4)

if c=1 and d=1, a+b=2 (*a* and *b* being whole numbers from 0 to 2)

if c=2 and d=1, a+b=3 (*a* and *b* being whole numbers from 0 to 3).

5. Method according to claim 4, characterised in that, as the organic tin-fluorine compound there is used dibutyltin difluoride

$$(n\text{-}C_4H_9)_2SnF_2.$$

6. Method according to claim 3, characterised in that, as the organic tin-fluorine compound there is used the ammonium tetrafluoro complex of dibutyltin,

$$(NH_4)_2\ [n\text{-}C_4H_9)_2SnF_4].$$

7. Method according to claim 3, characterised in that, as the organic tin-fluorine compound, there is used dibutyltin trifluoracetate,

$$(n\text{-}C_4H_9)_2Sn(CF_3COO)_2.$$